# EUROPÄISCHE PATENTANMELDUNG

(11) **EP 1 011 005 A2**
(43) Veröffentlichungstag der Anmeldung: **21.06.2000**
(21) Anmeldenummer: 99123261.2
(22) Anmeldetag: 29.11.1999
(51) Int. Cl.: G02B 27/01, G02B 27/18

(54) **Projektionseinheit**

(30) Priorität: 18.12.1998 DE 19858591
(71) Anmelder: Mannesmann VDO Aktiengesellschaft, 60388 Frankfurt am Main (DE)
(72) Erfinder: Hähl, Manfred, 63165 Mühlheim (DE)
(74) Vertreter: Rassler, Andrea, Dipl.-Phys.

(57) **Zusammenfassung**

Bei einer Projektionseinheit (6) werden zur Darstellung von Informationen auf einer Abbildungsfläche (20) drei Lichtquellen (7, 8, 9) verwendet. Die Lichtquellen (7, 8, 9) strahlen hierzu Licht unterschiedlicher Wellenlänge ab, welches zunächst als jeweils separater Farbkanal (16, 17, 18) in jeweils eine darauf abgestimmte Flüssigkristallanzeige (LCD) (10, 11, 12) fällt. Die Farbkanäle (16, 17, 18) werden anschließend mittels farbselektiver Spiegelflächen (14, 15) eines dichroiden Körpers (13) einander überlagert. Durch einen jeweils auf das Farbspektrum der verschiedenen Lichtquellen (7, 8, 9) abgestimmten Abstand (d', d'', d''') von dem dichroiden Körper (13) wird die Wellenlängenabhängigkeit des Brechungsindexes der Linse (19) ausgeglichen, so dass die Farbkanäle (16, 17, 18) mit einheitlicher Brennweite (d_{B}) auf der gemeinsame Abbildungsfläche (20) abgebildet werden. Eine aufwendige Korrekturoptik zum Ausgleich der Wellenlängenabhängigkeit der Linse (19) kann somit entfallen.

## Beschreibung

Die Erfindung betrifft eine Projektionseinheit mit einer Lichtquelle und einer zur Projektion einer Abbildung auf eine Abbildungs- oder Umkenkfläche ausgeführten Linse, insbesondere für eine Anzeige in einem Kraftfahrzeug.

Solche Projektionseinheiten werden derzeit dazu verwendet, eine Abbildung auf eine Abbildungsfläche im Bereich einer Armaturentafel des Kraftfahrzeuges zu projizieren. Hierzu fällt das Licht der Lichtquelle durch die Linse und wird mit einer durch den Brechungsindex der Linse bestimmten Brennweite in einem Brennpunkt gebündelt. Diese Brennweite ist jedoch abhängig von der Wellenlänge des Lichts, so dass von einer weißen Lichtquelle ausgehendes Licht nach dem Durchgang durch die Linse nicht in einem einheitlichen Brennpunkt, sondern in einer (kontinuierlichen) Reihe von farbigen, in unterschiedlichen Entfernungen zu der Linse angeordneten Brennpunkten gebündelt wird. Um diesen bei der Abbildung entstehenden chromatischen Fehler zu kompensieren, werden entsprechende Korrekturoptiken, beispielsweise Achromate, eingesetzt. Ebenso wie bei den beschriebenen reellen Abbildungen ist auch bei virtuellen Bildern, wie sie beispielsweise bei solchen Anzeigen im Kraftfahrzeug, bei denen die Abbildung in eine Frontscheibe des Kraftfahrzeuges eingespiegelt wird (sogenannte Head-Up Displays) auftreten, eine entsprechende Korrekturoptik zur Abbildung in einer Ebene erforderlich. Hier äußert sich das Problem in einem Farbsaum der Abbildung. Nachteilig bei solchen Projektionseinheiten ist der mit dem Einsatz der Korrekturoptik verbundene hohe Aufwand. Neben dem finanziellen Aufwand ist mit dem Einsatz der Korrekturoptik auch ein erhöhter Platzbedarf verbunden, was sich insbesondere bei der zuletzt genannten Verwendung bei einem Head-Up Display aufgrund der beengten Raumverhältnisse im Bereich der Frontscheibe des Kraftfahrzeuges als hinderlich erweist. Oben erwähnte Achromate können demgegenüber zwar einen geringen Einbauraum aufweisen, sind aber in der Herstellung sehr aufwendig und damit teuer.

Der Erfindung liegt das Problem zugrunde, eine Projektionseinheit der eingangs genannten Art so zu gestalten, dass die Wellenlängenabhängigkeit des Brechungsindexes der Linse ausgeglichen werden kann, ohne dass hierzu eine entsprechende Korrekturoptik vorgesehen werden muss. Dabei soll insbesondere auf zusätzliche Korrekturlinsen verzichtet und so der Aufwand zur Herstellung solcher Projektionseinheiten sowie die Baugröße reduziert werden.

Dieses Problem wird erfindungsgemäß durch mehrere Lichtquellen mit unterschiedlichem Farbspektrum, welche jeweils entsprechend der Wellenlänge des von ihnen abgestrahlten Lichtes mit einem unterschiedlichen Abstand zu der Linse angeordnet sind, gelöst. Dadurch kann der Abstand der jeweiligen Lichtquelle von der Linse insbesondere so bemessen sein, dass die Brennpunkte der Lichtquellen in einer gemeinsamen Ebene liegen. Eine Korrekturoptik ist dabei nicht erforderlich, so dass eine kompakte und zugleich vergleichsweise einfache Projektionseinheit realisierbar ist, die sich daher auch zum Einsatz als Head-Up Display bei einer Frontscheibe eines Kraftfahrzeuges eignet.

Besonders vorteilhaft ist eine Weiterbildung der Erfindung, bei der die Lichtquellen jeweils einen Farbkanal erzeugen, welche Farbkanäle mittels einer farbselektiven Spiegelfläche zu einer gemeinsamen Abbildung überlagert werden. Hierdurch können zunächst jeweils auf das Farbspektrum der Lichtquelle abgestimmte Bilder erzeugt und mittels der Spiegelflächen einander überlagert werden, wodurch eine Abbildung mit hoher Leuchtdichte erreicht wird. Dadurch ist die zu Darstellung der Abbildung erforderliche Lichtstärke der Lichtquelle vergleichsweise gering, wobei zugleich auch die Baugröße weiter reduziert werden kann.

Besonders vorteilhaft ist auch eine Weiterbildung der Erfindung, bei der die Projektionseinheit einen die farbselektiven Spiegelflächen aufweisenden, dichroiden Körper hat. Diese Ausführung ermöglicht das Einstrahlen jeweils einer Lichtquelle in eine Fläche des dichroiden Körpers, z. B. eines sogenannten Dichroitwürfels, wobei die einander überlagerten Farbkanäle an einer weiteren Fläche austreten können. Durch die gemeinsam überlagert austretenden Farbkanäle kann der unterschiedliche Abstand von der Linse in einfacher Weise durch den Abstand der jeweiligen Lichtquelle von dem dichroiden Körper bestimmt werden. Der Montageaufwand der Projektionseinheit lässt sich daher wesentlich vereinfachen und eine Anpassung des Abstandes zwischen der Linse und der Lichtquelle problemlos vornehmen.

Dabei ist es besonders günstig, wenn den Lichtquellen jeweils eine ein entsprechendes Bild erzeugende Flüssigkristallanzeige (LCD) zugeordnet ist. Dadurch lässt sich eine flexible Ansteuerung erreichen, die zudem eine frei programmierbare Oberfläche ermöglicht. Somit ist ein flexibler Einsatz bei unterschiedlichen Verwendungszwecken problemlos möglich. Ein farbiges Bild kann einfach durch eine Überlagerung der einzelnen, jeweils den Lichtquellen zugeordneten Bilder erzeugt werden.

Der unterschiedliche Abstand der einzelnen Lichtquellen von der Linse ermöglicht eine einheitliche Brennweite. Eine andere besonders nützliche Ausführungsform der Erfindung ist hingegen dann gegeben, wenn der Abstand der Lichtquellen von der Linse so bemessen ist, dass virtuelle Bilder der einzelnen Farbkanäle in unterschiedlichen Ebenen liegen. Hierdurch lässt sich eine Tiefenstaffelung der mittels der unterschiedlichen Lichtquellen erzeugten Abbildungen erreichen. Der Informationsgehalt kann dabei durch die Abbildung der Farbkanäle in verschiedenen Ebenen erweitert werden. Hierzu sind sowohl Anwendungen mit wahlweise hervorgehobenen Abbildungsflächen als auch spezielle räumliche Effekte bzw. plastische Darstellungen möglich. Der Abstand der Lichtquelle kann sowohl unveränderlich als auch variabel an die gewünschte Einstellung anpassbar sein. Eine vorstellbare entsprechende Darstellung reeller Bilder, so dass die Brennpunkte der einzelnen Farbkanäle in unterschiedlichen Ebenen liegen, ist in der Regel weniger praktikabel, da in diesem Fall ein Bild einer Farbe scharf darstellbar ist, die anderen Bilder hingegen eine gewisse Unschärfe aufweisen.

Es ist auch besonders günstig, wenn jeweils eine der Lichtquellen Licht eines roten, grünen und blauen Farbspektrums abstrahlt. Hierdurch lassen sich beliebige farbige Abbildungen aus einzelnen Farbkanälen zusammensetzen. Dabei ermöglicht eine enge Auslegung des Farbspektrums des abgestrahlten Lichtes einen entsprechend genauen Ausgleich der durch die Wellenlängenabhängigkeit des Lichtes verursachten unterschiedlichen Brennweiten.

Der Abstand der Lichtquellen kann entsprechend der Wellenlänge des abgestrahlten Lichtes fest eingestellt werden. Es sind darüber hinaus auch sinnvolle Anwendungen darstellbar, bei denen durch einen flexiblen Abstand der Lichtquelle von der Linse spezielle gewünschte, optische Effekte, beispielsweise räumliche Darstellungen, erreicht werden können.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Prinzipdarstellung der Wellenlängenabhängigkeit des Brechungsindexes einer Lichtquelle,
- Fig. 2: eine erfindungsgemäße Projektionseinheit mit drei entsprechend ihrer Wellenlänge von einer Linse beabstandeten Lichtquellen.

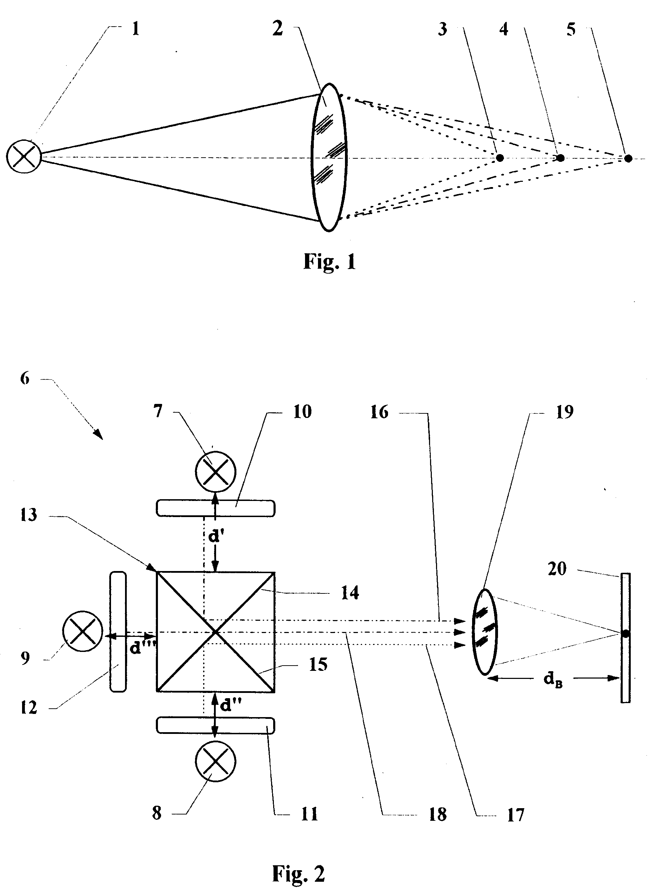

Figur 1 zeigt in einer Prinzipdarstellung eine im wesentlichen weißes Licht abstrahlende Lichtquelle 1, welche in eine hierzu beabstandete Linse 2 einstrahlt. Der Brechungsindex der Linse 2 ist abhängig von der Wellenlänge des einstrahlenden Lichtes, so dass das Licht unterschiedlicher Farbspektren in unterschiedlichen und hier lediglich exemplarisch dargestellten Brennpunkten 3, 4, 5 gebündelt wird.

Eine Umkehrung dieses physikalischen Prinzips kommt in einer in Figur 2 dargestellten, erfindungsgemäßen Projektionseinheit 6 zur Anwendung. Die Projektionseinheit 6 weist hierbei drei Lichtquellen 7, 8, 9 auf, die jeweils Licht eines unterschiedlichen Farbspektrums abstrahlen. Dieses Licht fällt zunächst durch eine der jeweiligen Lichtquelle 7, 8, 9 zugeordnete Flüssigkristallanzeige (LCD) 10, 11, 12 und fällt anschließend in jeweils eine Seite eines dichroiden Körpers 13 ein. Der dichroide Körper 13 weist zwei auf das Farbspektrum der Lichtquellen 10, 11 abgestimmte farbselektive Spiegelflächen 14, 15 auf. Mittels dieser Spiegelflächen 14, 15 werden die einzelnen durch die Lichtquellen 7, 8, 9 und die Flüssigkristallanzeige (LCD) 10, 11, 12 erzeugten Farbkanäle 16, 17, 18 zu einem gemeinsamen Strahlengang überlagert, wobei die einzelnen Farbkanäle 16, 17, 18 zur besseren Übersichtlichkeit nicht überlagert, sondern parallel dargestellt sind. Die überlagerten Farbkanäle 16, 17, 18 treffen anschließend auf eine hierzu beabstandete Linse 19, wobei die Strahlengänge zwischen den einzelnen Lichtquellen 7, 8, 9 und der Linse 19 unterschiedlich lang sind. Deren Differenz bestimmt sich nach dem Abstand d', d'', d''' der Lichtquellen 7, 8, 9 von dem dichroiden Körper 13. Im dargestellten Fall ist dieser Abstand d' d'', d''' so bemessen, dass die überlagerten Farbkanäle 16, 17, 18 mit einer einheitlichen Brennweite d_{B} auf eine gemeinsame Abbildungsfläche 20 projiziert werden. Durch den auf das Farbspektrum der Lichtquellen 7, 8, 9 abgestimmten unterschiedlichen Abstand d', d'', d''' von der Linse 19 kann die Wellenlängenabhängigkeit des Brechungsindexes der Linse 19 ausgeglichen und so auf eine Korrekturoptik verzichtet werden. Dadurch kann die Projektionseinheit 6 besonders einfach und vergleichsweise kompakt ausgeführt werden, wobei auch eine Darstellung auf weiteren Abbildungsflächen in verschiedenen Ebenen hintereinander zur tiefengestaffelten Informationsdarstellung problemlos realisierbar ist.

## Patentansprüche

1. Projektionseinheit mit einer Lichtquelle und einer zur Projektion einer Abbildung auf eine Abbildungs- oder Umlenkfläche ausgeführten Linse, insbesondere für eine Anzeige in einem Kraftfahrzeug, **gekennzeichnet durch** mehrere Lichtquellen (7, 8, 9) mit unterschiedlichem Farbspektrum, welche jeweils entsprechend der Wellenlänge des von ihnen abgestrahlten Lichtes mit einem unterschiedlichen Abstand (d', d'', d''') zu der Linse (19) angeordnet sind.

2. Projektionseinheit nach Anspruch 1, **dadurch gekennzeichnet**, dass die Lichtquellen (7, 8, 9) jeweils einen Farbkanal (16, 17, 18) erzeugen, welche Farbkanäle (16, 17, 18) mittels einer farbselektiven Spiegelfläche (14, 15) zu einer gemeinsamen Abbildung überlagert werden.

3. Projektionseinheit nach Anspruch 2, **dadurch gekennzeichnet**, dass die Projektionseinheit (6) einen die farbselektiven Spiegelflächen (14, 15) aufweisenden dichroiden Körper (13) hat.

4. Projektionseinheit nach einem der vorhergehenden Ansprüche, **dadurch gekennzeichnet,** dass den Lichtquellen (7, 8, 9) jeweils eine ein entsprechendes Bild erzeugende Flüssigkristallanzeige (LCD) (10, 11, 12) zugeordnet ist.

5. Projektionseinheit nach einem der vorhergehenden Ansprüche, **dadurch gekennzeichnet,** dass der Abstand (d', d'', d''') der Lichtquellen (7, 8, 9) von der Linse (19) so bemessen ist, dass virtuelle Bilder der einzelnen Farbkanäle (16, 17, 18) in unterschiedlichen Ebenen liegen.

6. Projektionseinheit nach einem der vorhergehenden Ansprüche, **dadurch gekennzeichnet,** dass jeweils eine der Lichtquellen (7, 8, 9) Licht eines roten, grünen und blauen Farbspektrums abstrahlt.
